Europäisches Patentamt

European Patent Office

Office européen des brevets

(19)

(11) **EP 1 424 791 A1**

(12) **EUROPEAN PATENT APPLICATION**
published in accordance with Art. 158(3) EPC

(43) Date of publication:
**02.06.2004 Bulletin 2004/23**

(51) Int Cl.⁷: **H04B 7/26**, H04B 7/10

(21) Application number: **02772836.9**

(86) International application number:
**PCT/JP2002/009041**

(22) Date of filing: **05.09.2002**

(87) International publication number:
**WO 2003/024001 (20.03.2003 Gazette 2003/12)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **07.09.2001 JP 2001271777**

(71) Applicant: **MATSUSHITA ELECTRIC INDUSTRIAL
CO., LTD.**
**Kadoma-shi, Osaka 571-8501 (JP)**

(72) Inventors:
• **OSAKI, Yoshiharu**
  **Yokohama-shi, Kanagawa 240-0006 (JP)**
• **MIYA, Kazuyuki**
  **Asao-ku, Kawasaki-shi, Kanagawa 215-0021 (JP)**

(74) Representative: **Grünecker, Kinkeldey,
Stockmair & Schwanhäusser Anwaltssozietät
Maximilianstrasse 58
80538 München (DE)**

(54) **INTERFERENCE WAVE POWER MEASUREMENT APPARATUS&comma; TRANSMISSION POWER CONTROL APPARATUS&comma; AND METHOD**

(57) The transmit power control apparatus 20 measures, through the SIR measuring section 101, not only a first SIR (SIR1) value reflecting all interference factors but also a second SIR (SIR2) value stripped of a power value component caused by multipath interference. The control signal formation section 31 forms a signal for controlling transmit power using these two SIRS (SIR1, SIR2). In this case, a control signal is formed for instructing that transmit power should not be allowed to increase/decrease when the ratio of the multipath interference component to all interference components is large and that transmit power should be allowed to increase/decrease when the ratio of the multipath interference component is small.

FIG.2

**Description**

Technical Field

The present invention relates to an interference signal power measuring apparatus and a method for measuring interference signal power included in a multipath reception signal and a transmit power control apparatus and a method for controlling transmit power of an opposite station based on power of a desired signal and power of an interference signal included in the multipath reception signal.

Background Art

In a conventional communication system using a CDMA (Code Division Multiple Access) system, a signal of each user produces interference with other users, and therefore transmit power control is performed to control transmit power of each user to a minimum necessary level. According to closed-loop transmit power control of this transmit power control, a receiving side apparatus presets target reception quality (e.g., a ratio of power of a desired signal to power of an interference signal of a reception signal (SIR : Signal to Interference Ratio)) and sends a transmit power control signal to a transmission apparatus so that the actually measured reception quality approximates to this target reception quality.

The above-described closed-loop transmit power control is described in the Unexamined Japanese Patent Publication No.2000-236296. This Unexamined Japanese Patent Publication No. 2000-236296 describes a technology for measuring desired signal power and interference signal power for fingers assigned to multipath reception signals and measuring an SIR without combining the measured desired signals and interference signals at a maximal ratio.

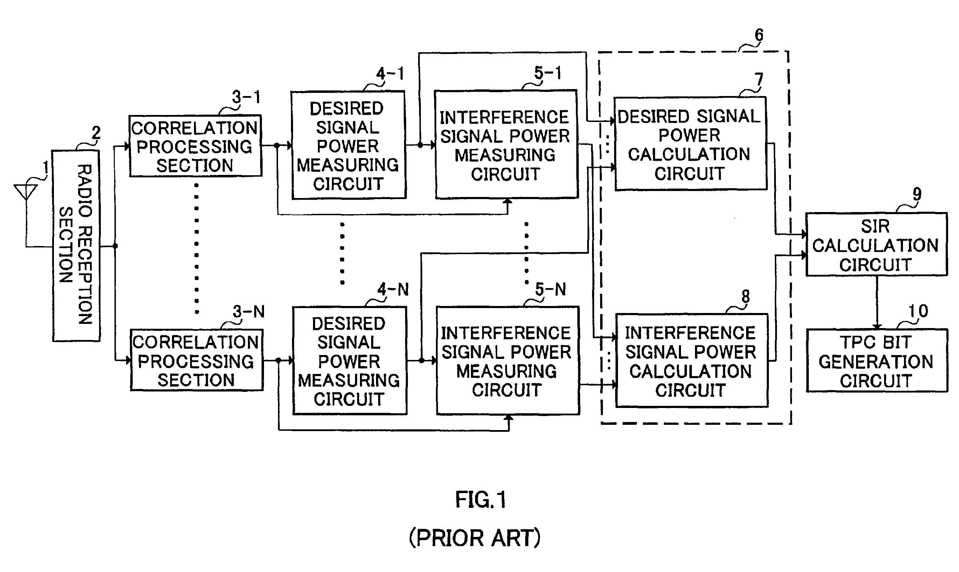

With reference to FIG.1, a conventional transmit power control apparatus will be explained. FIG.1 shows a transmit power control apparatus to control transmit power by measuring a signal to interference ratio. With the transmit power control apparatus, a signal sent from a transmission apparatus (not shown) is received as a multipath signal through an antenna 1, subjected to predetermined radio reception processing such as down-conversion and frequency conversion, etc., by a radio reception section 2, converted to a reception baseband signal (hereinafter referred to as "multipath reception signal").

Correlation processing sections 3-1 to 3-N assign fingers to predetermined path positions of the multipath reception signal, and carry out despreading processing, and outputs the processing results to the desired signal power measuring circuits 4-1 to 4-N. There are as many correlation processing sections 3-1 to 3-N as paths of the multipath reception signal. Here, the correlation processing section 3-1 assigns a finger to the path position of a direct signal, carries out correlation processing and the correlation processing section 3-N assigns a finger to the path position of the (N-1) th delay signal and carries out correlation processing.

The desired signal power measuring circuits 4-1 to 4-N measure desired signal power of the corresponding paths using the correlation calculation results output from the correlation processing sections 3-1 to 3-N. That is, the desired signal power measuring circuits 4-1 to 4-N measure desired signal power of the multipath reception signals for each path. The interference signal power measuring circuits 5-1 to 5-N measure the interference signal power of the corresponding paths based on the correlation processing results output from the correlation processing section 3-1 to 3-N and measurement results of desired signal power output from the desired signal power measuring circuits 4-1 to 4-N. That is, the interference signal power measuring circuits 5-1 to 5-N measure interference signal power of the multipath reception signals for each path.

The desired signal power measured by the desired signal power measuring circuits 4-1 to 4-N is output to a desired signal power calculation circuit 7 provided for a combining section 6 and the interference signal power measured by the interference measuring circuits 5-1 to 5-N is output to an interference signal power calculation circuit 8 provided for the combining section 6.

The desired signal power calculation circuit 7 calculates desired signal power by adding up desired signal power for the respective paths output from the desired signal power measuring circuits 4-1 to 4-N, and output this calculation result to an SIR calculation circuit 9. Furthermore, the interference signal power calculation circuit 8 calculates interference signal power by averaging interference signal power of the respective paths output from the interference signal power measuring circuits 5-1 to 5-N, and outputs this calculation result to the SIR calculation circuit 9.

The SIR calculation circuit 9 calculates an SIR based on the desired signal power output from the desired signal power calculation circuit 7 and the interference signal power output from the interference signal power calculation circuit 8. The SIR calculation circuit 9 calculates the SIR according to the following expression:

$$SIR = \frac{Desired\ signal\ power}{Interference\ signal\ power} \tag{1}$$

A TPC bit generation circuit 10 compares the target SIR calculated by the SIR calculation circuit 9 with a preset target SIR, generates a transmit power control signal (TPC bit) for increasing the transmit power when the calculated SIR is smaller than the target SIR, and on the contrary generates a TPC bit for reducing the transmit power when the calculated SIR is greater than the target SIR.

On the other hand, when transmit power control using the above-described SIR is carried out, if interference signal power increases, the transmit power is also controlled to increase accordingly and the transmit power finally reaches an upper limit. This results in interference with other communication channels, which causes a problem of deteriorating the communication quality and further reducing the communication capacity.

Hereunder, this problem will be explained. For simplicity of explanation, suppose a condition under which the number of paths is N and desired signal power is identical for different paths, that is, a condition with N paths at an equal level. Focused on one path, the desired signal power is S/N and the interference signal power is expressed by the following expression:

$$\text{Interference signal power} = I_o + S \times \frac{N-1}{SF \times N} \tag{2}$$

However, in Expression (2), S denotes the output of the desired signal power calculation circuit 7 shown in FIG. 1, while $I_o$ denotes noise other than the noise caused by multipath interference, for example, noise caused by interference from signals, etc., output from radio stations other than the opposite radio station with which a communication (transmission/reception) is in progress and SF denotes a spreading factor.

Here, suppose a case of $I_o \ll S$ which is the most extreme condition as a condition under which multipath interference cannot be ignored will be considered for simplicity of explanation. In Expression (2), in the case of $I_o \ll S$, the interference signal power is expressed by the expressed by the following expression:

$$\text{Interference signal power} = S \times \frac{N-1}{SF \times N} \tag{3}$$

That is, the output of the interference signal power calculation circuit 8 is a value expressed by the right side of Expression (3). Thus, the SIR is expressed by the following expression:

$$SIR = \frac{N \times SF}{N-1} \tag{4}$$

If this SIR falls below the target SIR and the transmit power of the opposite radio station is increased using the TPC bit to increase the SIR, the SIR becomes constant (N-1)/N as is apparent from Expression (4) irrespective of desired signal power S that changes by an increase of the transmit power of the opposite radio station, resulting in an increase of the transmit power up to an upper limit.

As shown above, the case with an extreme condition $I_o \ll S$ has been explained, but even if desired signal power S increases under a condition where multipath interference cannot be ignored, the SIR does not improve according to the increase. For this reason, desired signal power S increases continuously and the state changes to the extreme condition of $I_o \ll S$, and therefore the phenomenon described above will also occur in an area where multipath interference cannot be ignored.

The increase of the transmit power of this opposite radio station will increase interference with communication channels with other radio stations and also increase transmit power of other communication channels. This results in a problem of deteriorating the communication quality of other communication channels and further reducing the communication capacity.

Disclosure of Invention

It is a first object of the present invention to provide an interference signal power measuring apparatus and method capable of measuring interference signal power, which is a factor of reducing communication capacity in a CDMA system by separating the interference into multipath interference and other cell interference.

Furthermore, it is a second object of the present invention to provide a transmit power control apparatus and method capable of carrying out high quality communication with minimized influences on other communication channels.

The above-described first object can be attained by measuring desired signal power of multipath reception signals and measuring interference signal power of the multipath reception signals as the first interference signal power

and then calculating second interference signal power by removing the power component caused by multipath interference from the first interference signal power based on the desired signal power and first interference signal power.

Furthermore, the above-described second object can be attained by not increasing/decreasing transmit power when the ratio of the multipath interference component to all interference components is large, and by increasing/decreasing transmit power only when the ratio of the multipath interference is small. That is, doing so will prevent an unnecessary increase of transmit power which deteriorates other communication channels and will keep good communication quality of the own communication channel.

Brief Description of Drawings

FIG.1 is a block diagram showing a configuration of a conventional transmit power control apparatus;

FIG.2 is a block diagram showing a configuration of a transmit power control apparatus according to Embodiment 1 of the present invention;

FIG.3 is a flow chart illustrating an operation of Embodiment 1;

FIG.4 is a block diagram showing a configuration of a transmit power control apparatus according to Embodiment 2 of the present invention; and

FIG.5 is a flow chart illustrating an operation of Embodiment 2.

Best Mode for Carrying out the Invention

With reference now to the attached drawings, embodiments of the present invention will be explained in detail below.

(Embodiment 1)

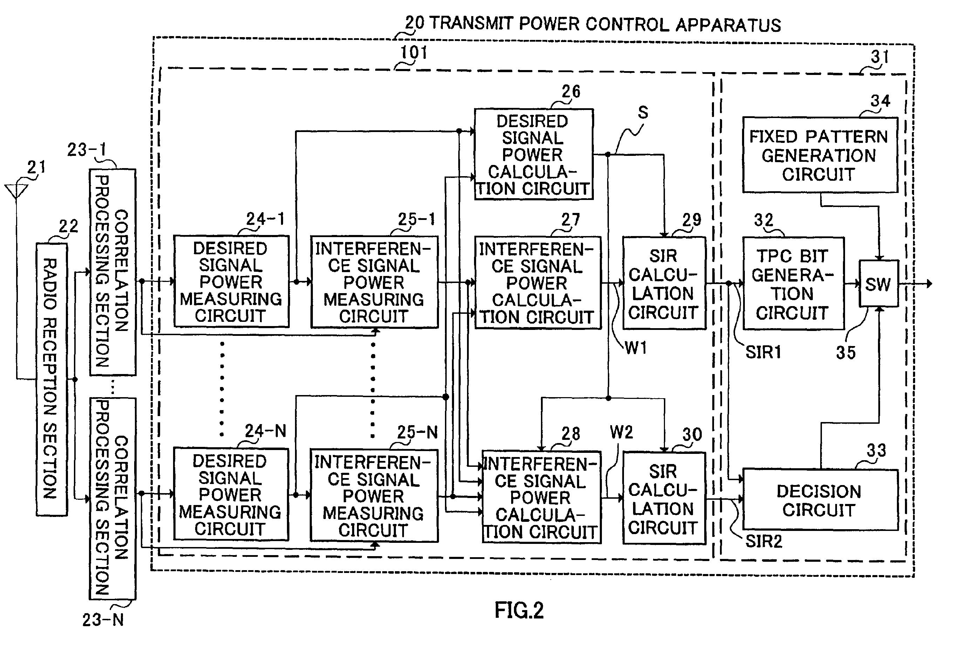

FIG.2 shows a reception apparatus having a transmit power control apparatus 20 according to Embodiment 1. In this reception apparatus, a signal sent from a transmission apparatus (not shown) is received by an antenna 21 as a multipath signal according to a radio wavepropagationenvironment, subjectedto predetermined radio reception processing such as down-conversion and frequency conversion by a radio reception section 22 and converted to multipath reception signals. Correlation processing sections 23-1 to 23-N perform despreading processing by assigning fingers to path positions of multipath reception signals and outputs the processing results to the corresponding desired signal power measuring circuits 24-1 to 24-N of the transmit power control apparatus 20.

The number of correlation processing sections 23-1 to 23-N provided is the same as the number of paths of received multipath reception signals. Here, the correlation processing section 23-1 carries out correlation processing by assigning a finger to the path position of a direct signal and the correlation processing section 23-N carries out correlation processing by assigning a finger to the path position of an (N-1)th delay signal.

The transmit power control apparatus 20 is roughly constructed of desired signal power measuring circuits 24-1 to 24-N and a desired signal power calculation circuit 26 as desired signal power measuring means, interference signal power measuring circuits 25-1 to 25-N and an interference signal power calculation circuit 27 as first interference signal power measuring means, desiredsignal power measuring circuits 24-1 to 24-N, interference signal power measuring circuits 25-1 to 25-N, the desired signal power calculation circuit 26 and interference signal power calculation circuit 28 as second interference signal power measuring means, an SIR calculation circuit 29 as first SIR calculation means, an SIR calculation circuit 30 as second SIR calculation means, and a control signal formation section 31 as control signal formation means.

The desired signal power measuring circuits 24-1 to 24-N measure desired signal power of the corresponding paths using the correlation calculation results output from the corresponding correlation processing sections 23-1 to 23-N. That is, the desired signal power measuring circuits 24-1 to 24-N measure desired signal power of the multipath reception signals for the respective paths. The interference signal power measuring circuits 25-1 to 25-N measure interference signal power of the corresponding paths based on the correlation processing results output from the corresponding correlation processing sections 23-1 to 23-N and the measurement results of the desired signal power output from the desired signal power measuring circuits 24-1 to 24-N. That is, the interference signal power measuring circuits 25-1 to 25-N measure interference signal power of a multipath reception signal for each path.

The desired signal power measured by the desired signal power measuring circuits 24-1 to 24-N are output to the desired signal power calculation circuit 26 and the second interference signal power calculation circuit 28, and the interference signal power measured by the interference signal power measuring circuits 25-1 to 25-N is output to the first and second interference signal power calculation circuits 27 and 28.

The desired signal power calculation circuit 26 calculates desired signal power by adding up desired signal power of different paths output from the desired signal power measuring circuits 24-1 to 24-N, and outputs this calculation result to the second interference signal power calculation circuit 28 and at the same time to the first and second SIR calculation circuits 29 and 30.

The first interference signal power calculation circuit 27 calculates interference signal power W1 by averaging interference signal power for each path output from the interference signal power measuring circuits 25-1 to 25-N, and outputs this calculation result to the first SIR calculation circuit 29.

The second interference signal power calculation circuit 28 calculates second interference signal power W2 stripped of multipath interference based on desired signal power Si (i = 1 to N) for each path input from the desired signal power measuring circuits 24-1 to 24-N, interference signal power Ri (i = 1 to N) for each path input from the interference signal power measuring circuits 25-1 to 25-N and desired signal power S calculated from the desired signal power calculation circuit 26 according to the following expression.

$$W2 = \frac{\sum_{i=1}^{N}\left\{ R_i - \dfrac{S - S_i}{SF} \right\}}{N} \qquad \cdots \ (5)$$

In Expression (5), SF denotes a spreading factor and N denotes the number of paths.

The first SIR calculation circuit 29 calculates a first SIR (SIR1) based on the desired signal power S output from the desired signal power calculation circuit 26 and the first interference signal power W1 output from the first interference signal power calculation circuit 27. The SIR calculation circuit 29 calculates SIR1 according to the following expression:

$$SIR1 = \frac{S}{R1} \qquad (6)$$

The second SIR calculation circuit 30 calculates a second SIR (SIR2) based on the desired signal power S output from the desired signal power calculation circuit 26 and the second interference signal power W2 stripped of multipath interference output from the second interference signal power calculation circuit 28 according to the following expression:

$$SIR2 = \frac{S}{R2} \qquad (7)$$

By the way, the second interference signal power W2 stripped of the multipath interference component is expressed according to the following expression:

Second interference signal power W2 stripped of multipath interference component

$$= \frac{\sum_{i=1}^{N}\left\{R_i - \dfrac{S-S_i}{SF}\right\}}{N}$$

$$= \frac{\sum_{i=1}^{N}\left\{I_0 + \dfrac{S\times(N-1)}{SF\times N} - \dfrac{S-\dfrac{S}{N}}{SF}\right\}}{N} = \frac{\sum_{i=1}^{N}\left\{I_0 + \dfrac{S\left(\dfrac{N-1}{N} - \dfrac{N-1}{N}\right)}{SF}\right\}}{N}$$

$$= \sum_{i=1}^{N}\frac{I_0}{N} = I_0 \qquad\qquad \cdots \ (8)$$

Then, the transmit power control apparatus 20 outputs SIR1 to a TPC bit generation circuit 32 and a decision circuit 33 of a control signal formation section 31 and outputs SIR2 to the decision circuit 33.

The TPC bit generation circuit 32 compares SIR1 calculated by the SIR calculation circuit 29 with a preset target SIR and generates a TPC (Transmit Power Control) bit intended to increase transmit power when SIR1 is smaller than the target SIR, and generates a TPC bit intended to decrease the transmit power when SIR1 is greater than the target SIR.

The decision circuit 33 compares a value (SIR1-SIR2) obtained by subtracting SIR2 from SIR1 with the predetermined threshold. When the subtraction result is equal to or lower than the threshold, the decision circuit 33 sends a switching control signal for instructing the switch circuit 35 to select and output the input from the TPC bit generation circuit 32.

On the contrary, when the subtraction result is greater than the threshold, the decision circuit 33 sends a switch control signal for instructing the switch circuit 35 to select and output the input from a fixed pattern generation circuit 34. Here, the fixed pattern generation circuit 34 forms a control bit string which becomes an alternation pattern for increasing/decreasing transmit power of the opposite station for every one control cycle.

Thus, the TPC bit or fixed pattern bit selected and output from the switch circuit 35 is multiplexed with the transmission data and pilot symbols and sent to the transmission apparatus of the opposite station through an antenna (not shown). The transmission apparatus of the opposite station increases/decreases or maintains the transmit power according to the TPC bit or fixed pattern bit.

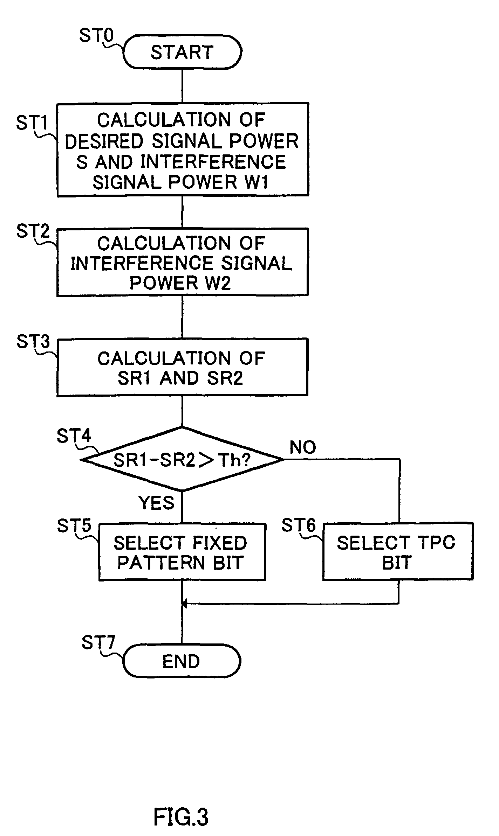

In the above-described configuration, the transmit power control apparatus 20 executes the transmit power control processing procedure as shown in FIG.3 to form a transmit power control signal to control the transmit power of the opposite station.

That is, when the transmit power control apparatus 20 starts processing in step ST0, it moves on to step ST1, calculates a desired signal power S by the desired signal power calculation circuit 26 and calculates a first interference signal power W1 by the interference signal power calculation circuit 27.

In the next step ST2, the transmit power control apparatus 20 calculates the second interference signal power W2 by the interference signal power calculation circuit 28 and moves on to step ST3.

In step ST3, the transmit power control apparatus 20 calculates SIR1 by the SIR calculation circuit 29 and at the same time calculates SIR2 by the SIR calculation circuit 30.

In the next step ST4, the transmit power control apparatus 20 decides whether the value obtained by subtracting SIR2 from SIR1 is greater than a threshold Th or not by the decision circuit 33. Then, the transmit power control apparatus 20 moves on to step ST5 when a positive result (the value is greater than threshold Th) is obtained, and moves on to step ST6 when a negative result (the value is smaller than threshold Th) is obtained.

When moved to step ST5, the transmit power control apparatus 20 selects and outputs a fixed pattern bit (a bit instructing that the transmit power of the opposite station should not be changed) generated by the fixed pattern generation circuit 34 from the switch circuit 35. In contrast, when moved to step ST6, the transmit power control apparatus 20 selects and outputs a TPC bit (a bit instructing that the transmit power of the opposite station should be increased/decreased) generated by the TPC bit generation circuit 32 from the switch circuit 35. Then, the transmit power control apparatus 20 carries out the processing in step ST5 or step ST6, and then moves on to step ST7 to end the transmit power control processing procedure.

Thus, the transmit power control apparatus 20 calculates the second interference signal power W2 stripped of the interference factor of multipath interference in addition to the first interference signal power W1 reflecting all interference factors. Then, in addition to the SIR1 which has been designated as an index for conventional transmit power control, the transmit power control apparatus 20 calculates SIR2 as an index for new transmit power control using this second interference signal power W2.

In practice, as described above, in a multipath propagation environment in which the ratio of the interference factor due to multipath propagation to all interference factors is high, the conventional SIR1 reflecting all interference factors does not change according to the increase/decrease of the transmit power of the opposite radio station, and therefore increasing/decreasing the transmit power based on only SIR1 is insignificant and increasing the transmit power unnecessarily will result in deterioration of other communication channels.

Thus, this embodiment calculates a difference between SIR1 and SIR2 and when this difference is greater than a threshold, this embodiment performs control in such a way that the level of the current transmit power is maintained without increasing transmit power. Here, that the difference between SIR1 and SIR2 is great means that the current communication state is in a multipath propagation environment, and in such a case, the value of SIR1 does not increase even if the transmit power is increased. That is, since the communication quality does not improve even if the transmit power is increased, the transmit power is kept at its current level.

On the contrary, that the difference between SIR1 and SIR2 is small means that the current communication state is not in a multipath interference environment, or in other words, that influences by interference other than multipath interference are great. In such a case, increasing/decreasing the transmit power adaptively according to SIR1 makes it possible to improve communication quality, and therefore a transmit power control signal for increasing/decreasing transmit power is sent.

Thus, according to the above-described configuration, transmit power is not increased/decreased when the ratio of the multipath interference component to all interference components is large, while transmit power is increased/decreased when the ratio of the multipath interference component to all interference components is small, and it is thereby possible to implement the transmit power control apparatus 20 capable of realizing a favorable radio communication without reducing the communication capacity and communication quality of other communication channels. It is also possible to prevent an unnecessary increase of transmit power and thereby reduce power consumption.

(Embodiment 2)

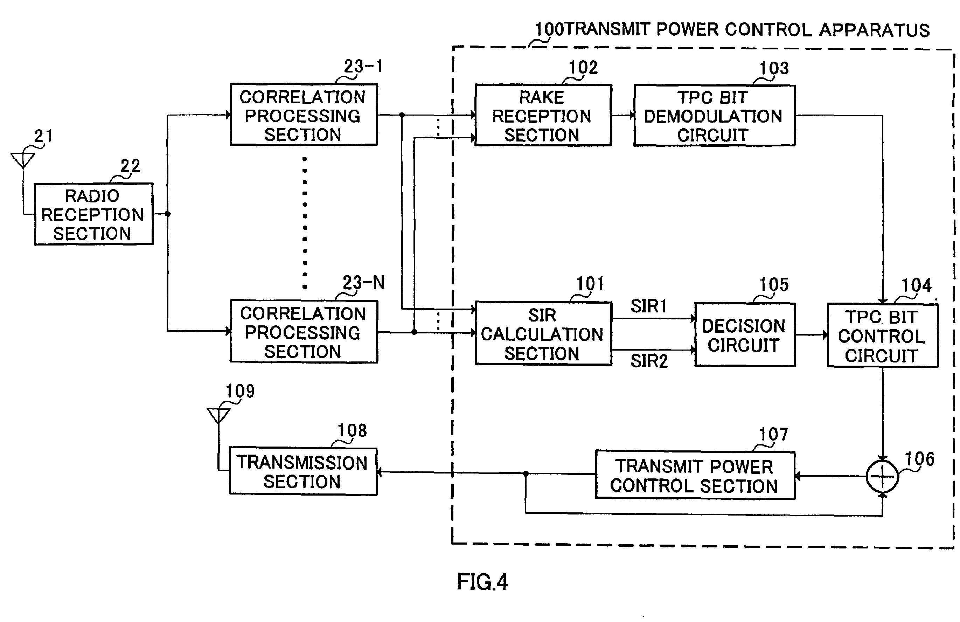

FIG.4, which is shown with the sections corresponding to those of FIG.2 assigned the same reference numerals, shows a transmission/reception apparatus having a transmit power control apparatus 100 according to Embodiment 2. For simplicity of explanation, FIG.4 shows a section composed of interference signal power measuring circuits 25-1 to 25-N, desired signal power measuring circuits 24-1 to 24-N, desired signal power calculation circuit 26, first and second interference signal power calculation circuits 27 and 28, first and second SIR calculation circuits 29 and 30 of FIG.2 as one block of an SIR measuring section 101 and their functions are the same as the corresponding sections of FIG.2.

The transmit power control apparatus 100 inputs the outputs of the correlation processing sections 23-1 to 23-N to a RAKE reception section 102 and an SIR measuring section 101. The RAKE reception section 102 combines at a maximal-ratio the signal power delayed and distributed depending on differences in the path length of the propagation path according to a maximal-ratio combining diversity system. The output of the RAKE reception section 102 is input to the TPC bit demodulation circuit 103. The TPC bit demodulation circuit 103 demodulates a TPC bit and the demodulated TPC bit is sent to a TPC bit control circuit 104.

Through the same operation as that described above in FIG.2, the SIR measuring section 101 forms first and second SIR1 and SIR2 and these SIR1 and SIR2 are sent to a decision circuit 105.

The decision circuit 105 compares a value obtained by subtracting SIR2 from SIR1 (SIR1-SIR2) with a predetermined threshold. When the subtraction result is equal to or smaller than the threshold, the decision circuit 105 sends a decision result instructing the TPC bit control circuit 104 to output a power control signal according to the demodulated TPC bit.

On the contrary, when the subtraction result is greater than the threshold, the decision circuit 105 sends a decision result instructing the TPC bit control circuit 104 to output a "0" level signal irrespective of the demodulated TPC bit.

More specifically, a case where the demodulated TPC bit signal consists of two types of signal, that is, a signal for increasing transmit power, that is, a "+1" level signal and a signal for decreasing transmit power, that is, a "0 or -1" level signal will be explained.

Then, when a decision result indicating that a value obtained by subtracting SIR2 from SIR1 (SIR1-SIR2) is equal to or smaller than the threshold is input, the TPC bit control circuit 104 outputs a "+1" level signal to the addition circuit 106 when the TPC bit demodulated signal is "+1" level and outputs a "-1" level signal to the addition circuit 106 when the TPC bit demodulated signal is "0 or -1" level.

By the way, when there are three types of TPC bit signal; increase "+1", decrease "-1" or no increase/decrease "0", it is obvious that the output from the TPC bit control circuit 104 to the addition circuit 106 is increase "+1", decrease "-1" or no increase/decrease "0", respectively.

As a result, the addition circuit 106 adds up the output of the TPC bit control circuit 104 and the current transmit power value controlling the transmit power control section 107, and inputs the addition result to the transmit power control section 107 as the next transmit power value. The transmit power control section 107 outputs a power control signal to a transmission section 108 of the own station and the transmission section 108 sends a radio signal through an antenna 109 with transmit power according to the power control signal.

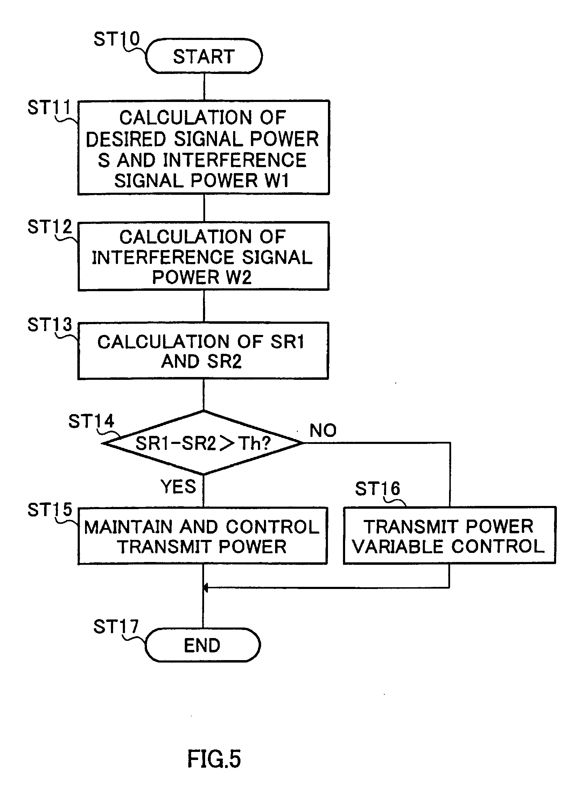

In the above-described configuration, the transmit power control apparatus 100 executes the transmit power control processing procedure as shown in FIG.5 to thereby control transmit power of the own station based on an environment of signal propagation from the opposite radio station to the own station. That is, when the transmit power control apparatus 100 starts the processing in step ST10, itmoves on to step ST11, calculates a desired signal power S and at the same time calculates a first interference signal power W1.

The transmit power control apparatus 100 calculates a second interference signal power W2 in the next step ST12 and moves on to step ST13. In step ST13, the transmit power control apparatus 100 calculates SIR1 and SIR2.

In the next step ST14, the transmit power control apparatus 100 decides through the decision circuit 105 whether a value obtained by subtracting SIR2 from SIR1 is greater than a threshold Th or not. Then, the transmit power control apparatus 100 moves on to step ST15 when a positive result (the value is greater than the threshold Th) is obtained and moves on to step ST16 when a negative result (the value is smaller than the threshold Th) is obtained.

When moved to step ST15, the transmit power control apparatus 100 keeps the transmit power of the own station to the current value by outputting a "0" level signal fromthe TPC bit control circuit 104 to the addition circuit 106. On the contrary, when moved to step ST16, the transmit power control apparatus 100 changes the transmit power of the own station by outputting a signal at a level according to the TPC bit demodulated signal from the TPC bit control circuit 104 to the addition circuit 106. Then, after carrying out processing in ST15 or step ST16, the transmit power control apparatus 100 moves on to step ST17 and ends the transmit power control processing procedure.

Thus, according to the above-described configuration, the transmit power of the own station is not allowed to increase/decrease irrespective of the transmit power control signal (TPC bit) sent from the opposite station when the ratio of the multipath interference component to all interference components is high, and the transmit power of the own station is allowed to increase/decrease according to the transmit power control signal sent from the opposite station when the ratio of the multipath interference component to all interference components is low, and it is therebypossible to implement the transmit power control apparatus 100 capable of carrying out favorable radio communication without reducing the communication quality of other communication channels. Furthermore, by preventing an unnecessary increase of transmit power of the own station, it is possible to increase a communication capacity or reduce power consumption.

By the way, in the radio base station based on the CDMA system according to Embodiment 1 or Embodiment 2, there are cases where a channel used in common (common channel) to various mobile stations (opposite radio stations) or a communication channel with other mobile stations is sent simultaneously. These channels are spread by codes orthogonal to the communication channel of the mobile station, and therefore when a specific propagation path is received, the power of the common channel or other mobile station included in the path do not produce interference.

However, in a multipath propagation environment, orthogonality of codes between paths is lost, and therefore the power of the common channel and the communication channels of other mobile stations also produces interference. Suppose the desired signal power (reception power) of the communication channel of the mobile station is S and reception power including the communication channel of the common channel or other mobile stations is S/$\alpha$, then the amount of multipath interference is S $\times$ (1-$\alpha$)/$\alpha$. Thus, Expression (5) is expressed as follows:

$$R2 \;\; = \;\; \frac{\sum_{i=1}^{N}\left\{R_i - \dfrac{S - S_i}{\alpha \times SF}\right\}}{N} \qquad \cdots \;\; (9)$$

However, in Expression (9), $\alpha$ denotes the ratio of transmit power for the mobile station to the overall transmit power including transmit power for the mobile station.

This allows a correct evaluation of influences of interference due to the multipath propagation environment also when communication channels of other mobile stations are multiplexed with codes having orthogonality.

The above-described embodiments have described the case where transmit power of the opposite station or own station is controlled, but the present invention is not limited to this and as described above. If second interference signal power by removing the power component caused by multipath interference from the first interference signal power is used, it is possible to implement an interference signal power measuring apparatus and interference signal power measuring method capable of measuring interference signal power, which is a factor of reducing the communication capacity in the CDMA system, separated into multipath interference and other cell interference.

The present invention is not limited to the above-described embodiments, but can be implemented modified in various ways.

The interference signal power measuring apparatus of the present invention is constructed of a desired signal power measuring section that measures desired signal power of multipath reception signals, a first interference signal power measuring section that measures interference signal power of the multipath reception signals as first interference signal power and a second interference signal power measuring section that calculates second interference signal power by removing the power component caused by multipath interference from the first interference signal power based on the desired signal power measured by the desired signal power measuring section and the first interference signal power measured by the first interference signal power measuring section.

According to this configuration, it is possible to measure second interference signal power stripped of the power component caused by multipath interference, and thereby it is possible to measure interference signal power which is a factor of reducing the communication capacity in a CDMA system separated into multipath interference and other cell interference.

Furthermore, the transmit power control apparatus of the present invention is a transmit power control apparatus that receives multipath reception signals and controls transmit power of the opposite station based on the desired signal power included in the multipath reception signals and interference signal power, constructed of a desired signal power measuring section that measures desired signal power of the multipath reception signals, a first interference signal power measuring section that measures interference signal power of the multipath reception signals as the first interference signal power, a second interference signal power measuring section that calculates second interference signal power by removing the power component caused by multipath interference from the first interference signal power based on desired signal power measured by the desired signal power measuring section and first interference signal power measured by the first interference signal power measuring section, a first SIR calculation section that calculates an SIR indicating the ratio of desired signal power to the first interference signal power as a first SIR value, a second SIR calculation section that calculates a second SIR value indicating the ratio of the desired signal power to the second interference signal power as a second SIR value, a control signal formation section that forms a transmit power control signal for controlling transmit power of the opposite station based on the first and second SIR values and a transmission section that transmits a transmit power control signal to the opposite station.

According to this configuration, it is possible to control the transmit power of the opposite station using not only the first SIR value reflecting all interference factors but also the second SIR value stripped of the power component caused by multipath interference and thereby perform transmit power control according to a radio signal propagation environment.

Furthermore, the control signal formation section of the transmit power control apparatus of the present invention includes a comparison section that compares a value obtained by subtracting the second SIR value from the first SIR value with a predetermined threshold and a control signal formation section that forms a transmit power control signal instructing that the transmit power of the current opposite station should be kept when the comparison section provides a comparison result indicating that the value obtained by subtracting the second SIR value from the first SIR value is greater than the threshold.

According to this configuration, that the difference between the first SIR value and second SIR value is large means that deterioration by multipath interference is dominant in the current propagation environment. In such a case, increasing transmit power of the opposite station will not improve the communication quality but only interfere other communication channels, and therefore the current value is kept without allowing the transmit power to increase.

On the contrary, that the difference between the first SIR value and second SIR value is small means that deterioration by multipath interference is not dominant in the current communication state and deterioration by interference other than multipath interference is greater. In such a case, it is possible to improve the communication quality by increasing the transmit power of the opposite station according to the first SIR value, and therefore a transmit power control signal instructing that the transmit power is adaptively increased/decreased according to the first SIR value is formed. As a result, it is possible to perform favorable radio communication without increasing transmit power unnecessarily and reducing the communication quality of other communication channels.

Furthermore, the transmit power control apparatus of the present invention is a transmit power control apparatus that receives multipath reception signals including a transmit power control signal for controlling transmit power and controls the transmit power of the own station based on the transmit power control signal, including a desired signal power measuring section that measures desired signal power of multipath reception signals, a first interference signal power measuring section that measures interference signal power of the multipath reception signals as first interference signal power, a second interference signal power measuring section that calculates second interference signal power by removing the power component caused by the multipath interference from the first interference signal power based on the desired signal power measured by the desired signal power measuring section and the first interference signal power measured by the first interference signal power measuring section, a first SIR calculation section that calculates an SIR indicating the ratio of the desired signal power to the first interference signal power as a first SIR value, a second SIR calculation section that calculates an SIR indicating the ratio of the desired signal power to the second interference signal power as a second SIR value, and a transmit power control section that controls the transmit power of the own station based on the first and second SIR values.

According to this configuration, it is possible to estimate an environment of radio signal propagation from the own station to the opposite radio station using not only the first SIR value reflecting all interference factors but also the second SIR value stripped of the power component caused by multipath interference, and thereby it is possible to control transmit power according to the radio signal propagation environment without directly evaluating the radio signal propagation environment.

Furthermore, the transmit power control section of the transmit power control apparatus according to the present invention is constructed of a comparison section that compares a value obtained by subtracting the second SIR value from the first SIR value with a predetermined threshold and a power control section that keeps the current transmit power irrespective of the transmit power control signal sent from the opposite radio station when the comparison section shows the comparison result indicating that the value obtained by subtracting the second SIR value from the first SIR value is greater than the threshold.

According to this configuration, that the difference between the first SIR value and second SIR value is large means that deterioration by multipath interference in the current communication state is dominant. In this case, increasing transmit power will not improve the communication quality but only produce interference with other communication channels, and therefore the transmit power of the own station is not allowed to increase even if a transmit power control signal instructs an increase of transmit power so that the present value is kept.

On the contrary, that the difference between the first SIR value and second SIR value is small means that deterioration by multipath interference is not dominant in the current communication state, but deterioration by interference other than multipath interference is greater. In such a case, transmit power is allowed to increase/decrease according to the received transmit power control signal. As a result, it is possible to perform favorable radio communication by estimating an environment of radio signal propagation to the opposite radio station based on an environment of signal propagation from the opposite radio station to the own station, without reducing the communication quality of other communication channels by unnecessarily increasing transmit power, and thereby it is possible to prevent a reduction of the communication capacity.

Furthermore, the radio base station apparatus of the present invention adopts a configuration including the above-described transmit power control apparatus.

According to this configuration, the radio base station provided with the transmit power control apparatus of the present invention that receives multipath reception signals and controls transmit power of the opposite radio station based on the desired signal power included in the multipath reception signals and interference signal power, allows an opposite radio station, for example, a portable information terminal to prevent an unnecessary increase of transmit power, and can thereby keep favorable communication quality and extend a time during which a communication can be maintained on a battery.

On the other hand, a radio base station provided with the transmit power control apparatus of the present invention that receives multipath reception signals including a transmit power control signal for controlling transmit power and controls transmit power of the own station based on the transmit power control signal, does not allow the transmit power of the own station to increase/decrease when the ratio of the multipath interference component to all interference components is large, and allows the transmit power to increase/decrease when the ratio of the multipath interference component is small, and can thereby prevent an unnecessary increase of transmit power, stabilize the system and keep a favorable communication capacity.

Furthermore, the portable information terminal apparatus of the present invention adopts a configuration including the above-described transmit power control apparatus.

According to this configuration, the portable in formation terminal apparatus provided with the transmit power control apparatus of the present invention that receives multipath reception signals and controls transmit power of the opposite station based on the desired signal power and interference signal power included in the multipath reception signals does not allow the transmit power to increase/decrease when the ratio of the multipath interference component to all interference components is large and allows the transmit power to increase/decrease when the ratio of the multipath interference component is small, and therefore the radio base station apparatus of the opposite radio station can prevent an unnecessary increase of transmit power, stabilize the system and keep a favorable communication capacity.

On the other hand, the portable information terminal apparatus provided with the transmit power control apparatus of the present invention that receives multipath reception signals including a transmit power control signal for controlling transmit power and controls transmit power of the own station based on the transmit power control signal prevents an unnecessary increase of transmit power of the own station, and can thereby keep favorable communication quality, reduce power consumption and extend a time during which a communication can be maintained on a battery.

As explained above, the present invention can implement an interference signal power measuring apparatus and interference signal power measuring method capable of measuring desired signal power of multipath reception signals, measuring interference signal power of the multipath reception signals as the first interference signal power, and then calculating second interference signal power by removing the power component caused by multipath interference from the first interference signal power based on the desired signal power and first interference signal power, and thereby measuring the interference signal power which is a factor of reducing the communication capacity in a CDMA system separated into multipath interference and other cell interference.

Furthermore, the present invention can implement a transmit power control apparatus and its method capable of controlling transmit power using not only a first SIR (SIR1) value reflecting all interference factors but also a second SIR (SIR2) value stripped of a power value component caused by multipath interference, and thereby preventing an unnecessary increase of transmit power and as a result, minimizing the influence on the communication quality of other communication channels and preventing a reduction of the communication capacity.

This application is based on the Japanese Patent Application No. 2001-271777 filed on September 7, 2001, entire content of which is expressly incorporated by reference herein.

Industrial Applicability

The present invention is preferably applicable to a portable information terminal such as a cellular phone or a radio base station.

**Claims**

1.   An interference signal power measuring apparatus comprising:

> a desired signal power measuring section that measures desired signal power of multipath reception signals;
> a first interference signal power measuring section that measures interference signal power of said multipath reception signals as first interference signal power; and
> a second interference signal power measuring section that calculates second interference signal power by removing the power component caused by multipath interference from said first interference signal power based on the desired signal power measured by said desired signal power measuring section and said first interference signal power measured by said first interference signal power measuring section.

2.   An interference signal power measuring method comprising:

> a desired signal power measuring step of measuring desired signal power of multipath reception signals;
> a first interference signal power measuring step of measuring interference signal power of said multipath reception signals as first interference signal power; and
> a second interference signal power measuring step of calculating second interference signal power by removing the power component caused by multipath interference from said first interference signal power based on the desired signal power measured in said desired signal power measuring step and said first interference signal power measured in said first interference signal power measuring step.

3.   A transmit power control apparatus that receives multipath reception signals and controls transmit power of the opposite station based on the desired signal power included in said multipath reception signals and interference signal power, comprising:

> a desired signal power measuring section that measures desired signal power of the multipath reception signals;
> a first interference signal power measuring section that measures interference signal power of said multipath reception signals as the first interference signal power;
> a second interference signal power measuring section that calculates second interference signal power by removing the power component caused by multipath interference from said first interference signal power based on desired signal power measured by said desired signal power measuring section and said first interference signal power measured by said first interference signal power measuring section;
a first SIR calculation section that calculates an SIR indicating the ratio of said desired signal power to said first interference signal power as a first SIR value, a second SIR calculation section that calculates an SIR indicating the ratio of said desired signal power to said second interference signal power as a second SIR value;
a control signal formation section that forms a transmit power control signal for controlling transmit power of the opposite station based on said first and second SIR values; and
a transmission section that transmits said transmit power control signal to the opposite station.

4. The transmit power control apparatus according to claim 3, wherein said control signal formation section comprising:

a comparison section that compares a value obtained by subtracting the second SIR value from the first SIR value with a predetermined threshold; and
a control signal formation section that forms a transmit power control signal instructing that the transmit power of the opposite radio station should be kept when said comparison section provides a comparison result indicating that the value obtained by subtracting the second SIR value from the first SIR value is greater than said threshold.

5. A transmit power control apparatus that receives multipath reception signals including a transmit power control signal for controlling transmit power and controls the transmit power of the own station based on said transmit power control signal, comprising:

a desired signal power measuring section that measures desired signal power of multipath reception signals;
a first interference signal power measuring section that measures interference signal power of said multipath reception signals as first interference signal power;
a second interference signal power measuring section that calculates second interference signal power by removing the power component caused by the multipath interference from said first interference signal power based on the desired signal power measured by said desired signal power measuring section and said first interference signal power measured by said first interference signal power measuring section;
a first SIR calculation section that calculates an SIR indicating the ratio of said desired signal power to said first interference signal power as the first SIR value;
a second SIR calculation section that calculates an SIR indicating the ratio of said desired signal power to said second interference signal power as a second SIR value; and
a transmit power control section that controls the transmit power of the own station based on said first and second SIR values.

6. The transmit power control apparatus according to claim 5, wherein said transmit power control section comprising:

a comparison section that compares a value obtained by subtracting the second SIR value from the first SIR value with a predetermined threshold; and
a power control section that keeps the current transmit power irrespective of the transmit power control signal sent from the opposite radio station when said comparison section shows a comparison result indicating that the value obtained by subtracting the second SIR value from the first SIR value is greater than said threshold.

7. A radio base station apparatus comprising the transmit power control apparatus according to claim 3.

8. A radio base station apparatus comprising the transmit power control apparatus according to claim 5.

9. A portable information terminal apparatus comprising the transmit power control apparatus according to claim 3.

10. A portable information terminal apparatus comprising the transmit power control apparatus according to claim 5.

11. A transmit power control method for receiving multipath reception signals and controlling transmit power of the opposite station based on the desired signal power included in said multipath reception signals and interference signal power, comprising:

a desired signal power measuring step of measuring desired signal power of the multipath reception signals;

a first interference signal power measuring step of measuring interference signal power of said multipath reception signals as the first interference signal power;

a second interference signal power measuring step of calculating second interference signal power by removing the power component caused by multipath interference from said first interference signal power based on desired signal power measured in said desired signal power measuring section and said first interference signal power measured in said first interference signal power measuring step;

a first SIR calculation step of calculating an SIR indicating the ratio of said desired signal power to said first interference signal power as a first SIR value;

a second SIR calculation step of calculating an SIR indicating the ratio of said desired signal power to said second interference signal power as a second SIR value;

a control signal formation step of forming a transmit power control signal for controlling transmit power of the opposite station based on said first and second SIR values; and

a transmission step of transmitting said transmit power control signal to the opposite station.

12. The transmit power control method according to claim 11, wherein in said control signal formation step, a value obtained by subtracting the second SIR value from the first SIR value is compared with a predetermined threshold and a transmit power control signal instructing that the transmit power of the opposite station should be kept is formed when a comparison result indicating that the value obtained by subtracting the second SIR value from the first SIR value is greater than said threshold is obtained.

13. A transmit power control method for receiving a multipath reception signal including a transmit power control signal for controlling transmit power and controlling the transmit power of the own station based on said transmit power control signal, comprising:

a desired signal power measuring step of measuring desired signal power of multipath reception signals;

a first interference signal power measuring step of measuring interference signal power of said multipath reception signals as first interference signal power;

a second interference signal power measuring step of calculating second interference signal power by removing the power component caused by the multipath interference from said first interference signal power based on the desired signal power measured in said desired signal power measuring section and said first interference signal power measured in said first interference signal power measuring step;

a first SIR calculation step of calculating an SIR indicating the ratio of said desired signal power to said first interference signal power as a first SIR value;

a second SIR calculation step of calculating an SIR indicating the ratio of said desired signal power to said second interference signal power as a second SIR value; and

a transmit power control step of controlling the transmit power of the own station based on said first and second SIR values.

14. The transmit power control method according to claim 13, wherein in the transmit power control step, a value obtained by subtracting the second SIR value from the first SIR value is compared with a predetermined threshold and the current transmit power is kept irrespective of the transmit power control signal when a comparison result indicating that the value obtained by subtracting the second SIR value from the first SIR value is greater than said threshold is obtained.

FIG.1

(PRIOR ART)

FIG.2

**20 TRANSMIT POWER CONTROL APPARATUS**

101

21

22 RADIO RECEPTION SECTION

23-1 CORRELATION PROCESSING SECTION

23-N CORRELATION PROCESSING SECTION

24-1 DESIRED SIGNAL POWER MEASURING CIRCUIT

24-N DESIRED SIGNAL POWER MEASURING CIRCUIT

25-1 INTERFERENCE SIGNAL POWER MEASURING CIRCUIT

25-N INTERFERENCE SIGNAL POWER MEASURING CIRCUIT

26 DESIRED SIGNAL POWER CALCULATION CIRCUIT

27 INTERFERENCE SIGNAL POWER CALCULATION CIRCUIT

28 INTERFERENCE SIGNAL POWER CALCULATION CIRCUIT

29 SIR CALCULATION CIRCUIT

30 SIR CALCULATION CIRCUIT

S

W1

W2

SIR1

SIR2

31

34 FIXED PATTERN GENERATION CIRCUIT

32 TPC BIT GENERATION CIRCUIT

33 DECISION CIRCUIT

SW

35

EP 1 424 791 A1

ST0 START

ST1 CALCULATION OF DESIRED SIGNAL POWER S AND INTERFERENCE SIGNAL POWER W1

ST2 CALCULATION OF INTERFERENCE SIGNAL POWER W2

ST3 CALCULATION OF SR1 AND SR2

ST4 SR1−SR2 > Th?

NO

YES

ST5 SELECT FIXED PATTERN BIT

ST6 SELECT TPC BIT

ST7 END

FIG.3

FIG.4

EP 1 424 791 A1

ST10 → START

ST11 → CALCULATION OF DESIRED SIGNAL POWER S AND INTERFERENCE SIGNAL POWER W1

ST12 → CALCULATION OF INTERFERENCE SIGNAL POWER W2

ST13 → CALCULATION OF SR1 AND SR2

ST14 → $SR1 - SR2 > Th?$

YES → ST15 → MAINTAIN AND CONTROL TRANSMIT POWER

NO → ST16 → TRANSMIT POWER VARIABLE CONTROL

ST17 → END

FIG.5

## INTERNATIONAL SEARCH REPORT

| | International application No. |
|---|---|
| | PCT/JP02/09041 |

### A. CLASSIFICATION OF SUBJECT MATTER
Int.Cl$^7$ H04B7/26, 102

According to International Patent Classification (IPC) or to both national classification and IPC

### B. FIELDS SEARCHED
Minimum documentation searched (classification system followed by classification symbols)
Int.Cl$^7$ H04B7/00, H04B7/005, H04B7/02-7/12, H04B7/24-7/26,
      H04Q7/00-7/38

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2001-77724 A (NEC Corp.), 23 March, 2001 (23.03.01), Full text; Figs. 1 to 3 & DE 10044547 A1 | 1-14 |
| A | JP 2001-7763 A (Matsushita Electric Industrial Co., Ltd.), 12 January, 2001 (12.01.01), Full text; Figs. 1 to 6 & AU 200052475 A    & CN 1314032 A & EP 1107482 A1    & WO 01/01607 A1 | 1-14 |
| A | JP 2000-138633 A (NEC Corp.), 16 May, 2000 (16.05.00), Full text; Figs. 1 to 8 & EP 1128578 A1    & WO 00/27050 A1 | 1-14 |

☐ Further documents are listed in the continuation of Box C.   ☐ See patent family annex.

| | |
|---|---|
| *    Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 06 December, 2002 (06.12.02) | 17 December, 2002 (17.12.02) |

| Name and mailing address of the ISA/ | Authorized officer |
|---|---|
| Japanese Patent Office | |
| Facsimile No. | Telephone No. |

Form PCT/ISA/210 (second sheet) (July 1998)